# EUROPEAN PATENT APPLICATION

(11) **EP 4 138 358 A1**
(43) Date of publication of application: **22.02.2023**
(21) Application number: 20900753.3
(22) Date of filing: 10.11.2020
(51) Int. Cl.: H04L 29/08, G06N 3/08

(54) **VOICE PACKET RECOMMENDATION METHOD, APPARATUS AND DEVICE, AND STORAGE MEDIUM**

(30) Priority: 27.05.2020 CN 202010463433
(71) Applicant: Baidu Online Network Technology (Beijing) Co., Ltd, Beijing 100085 (CN)
(72) Inventor: HUANG, Jizhou, Beijing 100085 (CN); DING, Shiqiang, Beijing 100085 (CN); WU, Di, Beijing 100085 (CN)
(74) Representative: Carangelo, Pierluigi
(86) International application number: PCT/CN2020/127673
(87) International publication number: WO 2021/238081

(57) **Abstract**

Provided are a voice packet recommendation method and apparatus, a device and a storage medium, relating to intelligent search technologies. The solution includes constructing a first video training sample according to first user behavior data of a first sample user in a video recommendation scenario and first video data associated with the first user behavior data; constructing a user training sample according to sample search data of the first sample user and historical interaction data about a first sample voice packet; pretraining a neural network model according to the first video training sample and the user training sample; and retraining the pretrained neural network model by using a sample video and sample tag data which are associated with a second sample voice packet to obtain a voice packet recommendation model. With the solution, the neural network model can be trained in the case of cold start so that the neural network model can recommend a voice packet automatically in the case of cold start.

## Description

This application claims priority to Chinese Patent Application No. 202010463433.6 filed with the CNIPA on May 27, 2020, the disclosure of which is incorporated herein by reference in its entirety.

### TECHNICAL FIELD

The present application relates to the field of data processing technologies, for example, intelligent search technologies.

### BACKGROUND

In an application having the voice broadcasting function, usually multiple voice packets are available for selection by a user. To make it easier and more efficient for the user to select a voice packet, it is usual practice to recommend a voice packet catering to the interest of the user to the user in a manner of personalized recommendation.

However, personalized recommendation is heavily dependent on historical behavioral data of the user. When there are no registered users or few registered-user behaviors at the early development stage of the application, behavior data is insufficient for personalized recommendation to the user.

### SUMMARY

The following is a summary of the subject matter described herein in detail. This summary is not intended to limit the scope of the claims.

Embodiments of the present application provide a voice packet recommendation method and apparatus, a device and a storage medium for automatic recommendation of a voice packet in the case of cold start.

According to one aspect of the present application, a voice packet recommendation method is provided.

The method includes constructing a first video training sample according to first user behavior data of a first sample user in a video recommendation scenario and first video data associated with the first user behavior data; constructing a user training sample according to sample search data of the first sample user and historical interaction data about a first sample voice packet; pretraining a neural network model according to the first video training sample and the user training sample; and retraining the pretrained neural network model by using a sample video and sample tag data which are associated with a second sample voice packet to obtain a voice packet recommendation model.

According to another aspect of the present application, a voice packet recommendation apparatus is provided. The apparatus includes a first video training sample construction module, a user training sample construction module, a pretraining module and a retraining module.

The first video training sample construction module is configured to construct a first video training sample according to first user behavior data of a first sample user in a video recommendation scenario and first video data associated with the first user behavior data.

The user training sample construction module is configured to construct a user training sample according to sample search data of the first sample user and historical interaction data about a first sample voice packet.

The pretraining module is configured to pretrain a neural network model according to the first video training sample and the user training sample.

The retraining module is configured to retrain the pretrained neural network model by using a sample video and sample tag data which are associated with a second sample voice packet to obtain a voice packet recommendation model.

According to another aspect of the present application, an electronic device is provided. The device includes at least one processor and a memory which is in communication connection to the at least one processor.

The memory stores instructions executable by the at least one processor, where the instructions are configured to, when executed by at least one processor, cause the at least one processor to perform the voice packet recommendation method of any one of embodiments of the present application.

According to another aspect of the present application, a non-transitory computer-readable storage medium is provided. The storage medium stores computer instructions, wherein the computer instructions are configured to cause a computer to perform the voice packet recommendation method of any one of embodiments of the present application.

In embodiments of the present application, the solution includes constructing a first video training sample according to first user behavior data of a first sample user in a video recommendation scenario and first video data associated with the first user behavior data; constructing a user training sample according to sample search data of the first sample user and historical interaction data about a first sample voice packet; pretraining a neural network model according to the first video training sample and the user training sample; and retraining the pretrained neural network model by using a sample video and sample tag data which are associated with a second sample voice packet to obtain a voice packet recommendation model. With the solution, the neural network model can be trained in the case of cold start so that the neural network model can recommend a voice packet automatically in the case of cold start.

It is to be understood that the content described in this part is neither intended to identify key or important features of embodiments of the present disclosure nor intended to limit the scope of the present disclosure. Other features of the present disclosure are apparent from the description provided hereinafter.

Other aspects can be understood after the drawings and the detailed description are read and understood.

### BRIEF DESCRIPTION OF DRAWINGS

The drawings are intended to provide a better understanding of the present solution and not to limit the present application.
FIG. 1 is a flowchart of a voice packet recommendation method according to embodiments of the present application.
FIG. 2 is a flowchart of another voice packet recommendation method according to embodiments of the present application.
FIG. 3 is a flowchart of another voice packet recommendation method according to embodiments of the present application.
FIG. 4A is a flowchart of another voice packet recommendation method according to embodiments of the present application.
FIG. 4B is a diagram illustrating the structure of a video vector representation network according to embodiments of the present application.
FIG. 4C is a diagram illustrating the structure of a user preference vector representation network according to embodiments of the present application.
FIG. 4D is a diagram illustrating the structure of a matching model according to embodiments of the present application.
FIG. 4E is a diagram illustrating the structure of a pretrained matching network according to embodiments of the present application.
FIG. 5 is a diagram illustrating the structure of a voice packet recommendation apparatus according to embodiments of the present application.
FIG. 6 is a block diagram of an electronic device for performing a voice packet recommendation method according to embodiments of the present application.

### DETAILED DESCRIPTION

Example embodiments of the present application, including details of embodiments of the present application, are described hereinafter in connection with the drawings to facilitate understanding. The example embodiments are illustrative only. Therefore, it is to be understood by those having ordinary skill in the art that changes and modifications may be made to the embodiments described herein without departing from the scope and spirit of the present application. Similarly, description of well-known functions and constructions is omitted hereinafter for clarity and conciseness.

Each voice packet recommendation method and each voice packet recommendation apparatus provided in embodiments of the present application are applicable to a case where an application having the voice broadcasting function is trained to be able to recommend a voice packet automatically in the case of cold start. Each voice packet recommendation method provided in embodiments of the present application is performed by a voice packet recommendation apparatus. The apparatus is implemented as software, hardware or a combination thereof and disposed in an electronic device.

The cold start may be understood as a case where after a new item or a new user is added to an application, an item cannot be recommended to the user due to insufficient data amount. For example, in embodiments of the present application, in the case where the voice packet recommendation function is added to an application having the voice broadcasting function and no large amount of historical data is available, a voice packet recommendation model cannot be trained using historical data.

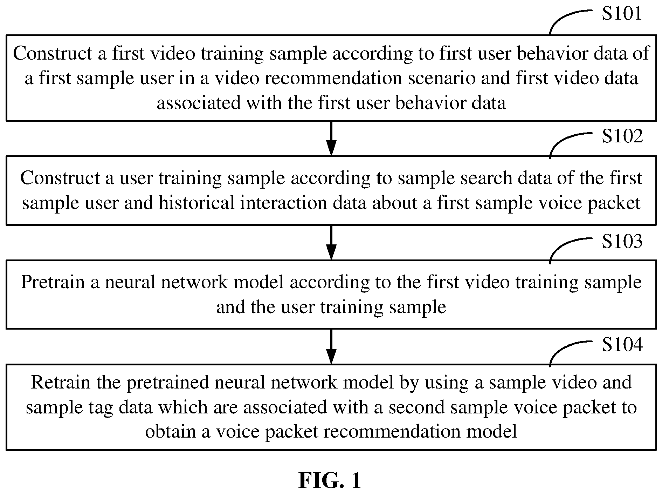

FIG. 1 is a flowchart of a voice packet recommendation method according to embodiments of the present application. The method includes the steps below.

In S101, a first video training sample is constructed according to first user behavior data of a first sample user in a video recommendation scenario and first video data associated with the first user behavior data.

The video recommendation scenario may be any scenario having a video recommendation requirement, for example, a scenario where a video is recommended to a user in at least one of a short video social application, a video playback application or a shopping promotion application.

In order that a subsequent pretraining model well matches a finally trained voice packet recommendation model, that is, the training period of the retraining is shortened, and in order that the model accuracy of the voice packet recommendation model is ensured, the recommendation mechanism of the video recommendation scenario in embodiments of the present application is the same as or similar to the recommendation mechanism of the voice packet recommendation scenario in the present application.

The first user behavior data may be data about behavior of interaction between the first sample user and a first video. The behavior of interaction may be at least one of browsing, upvoting, adding to favorites, downloading, commenting or sharing. In an optional implementation of embodiments of the present application, in order that the accuracy of the training result of pretraining a neural network model subsequently is improved so that the model accuracy of a voice packet recommendation model is improved and in order that the training period in which the voice packet recommendation model is retrained is shortened, the first user behavior data may include behavior data about user behavior of browsing completed, upvoting and adding to favorites. Exemplarily, it is feasible to determine first video data about the first sample user's behavior of browsing completed, upvoting and adding to favorites to be positive samples, to determine first video data about the first sample user's other browsing behavior to be negative samples, and to construct a first video training sample from each positive sample and each negative sample. To avoid overfitting in a subsequently trained model and ensure the sensitivity and specificity of the trained model, it is usual practice to set a reasonable proportion between positive samples and negative samples. The proportion may be set by a skilled technician according to needs or empirical values or are repeatedly determined by a skilled technician based on a large number of experiments.

The first video data may be data associated with a first video and used for representing at least one of video content, video feature, video attribute or the like. For example, first video data may include at least one of video content, description text or other data of a first video.

The first video may be any video in a video recommendation scenario or may be a video associated with a sample voice packet in the video recommendation scenario.

In S102, a user training sample is constructed according to sample search data of the first sample user and historical interaction data about a first sample voice packet.

The sample search data and the historical interaction data may be data generated from the search behavior of a first sample user in a voice packet search scenario. The voice packet search scenario may be a scenario where a user searches for a voice packet in an application having the voice broadcasting function and has behavior of interaction for the searched voice packet. The behavior of interaction may be at least one of browsing, upvoting, adding to favorites, downloading, commenting, sharing or using. In an optional implementation of embodiments of the present application, in order that the accuracy of the training result of pretraining a neural network model subsequently is improved so that the model accuracy of a voice packet recommendation model is improved and in order that the training period in which the voice packet recommendation model is retrained is shortened, the historical interaction data may be voice packet usage data. The sample search data may be a search word used when the first sample user performs a voice packet search.

In S103, a neural network model is pretrained according to the first video training sample and the user training sample.

Exemplarily, when a neural network model is pretrained, it is feasible to input first video data in a first video training sample of a first sample user and historical interaction data and sample search data in a user training sample to the neural network model, to fit user behavior of interaction through the output result of the neural network model, and to adjust and optimize, according to the difference of the fitted user behavior of interaction and first user behavior data, network parameters of the neural network model to pretrain the neural network model.

In S 104, the pretrained neural network model is retrained by using a sample video and sample tag data which are associated with a second sample voice packet so that a voice packet recommendation model is obtained.

The sample video associated with the second sample voice packet may include at least one of the image, voice or caption of a voice provider. The at least one of the image, voice or caption is used for representing the image feature and voice feature of the voice provider in a voice packet. The image feature includes at least one of a loli image, a royal elder sister image, an uncle image or an intellectual property (IP) image. The voice feature includes at least one of a voice quality or a voice style. The voice quality includes at least one of male, female, sweet or husky. The voice style includes at least one of a broadcasting tone or a humorous style.

The sample tag data may be tag data manually tagged for a second sample voice packet according to the degree of interest in the second sample voice packet.

It is to be noted that the second sample voice packet may be the same as or different from the preceding first sample voice packet.

Exemplarily, a voice packet training sample is constructed from a sample video and sample tag data which are associated with a second sample voice packet; and a pretrained neural network model is retrained according to the voice packet training sample so that at least part of network parameters of the pretrained neural network model are adjusted and optimized so that a voice packet recommendation model is obtained.

For example, associated data of a sample video associated with a second sample voice packet and voice packet associated data of the second sample voice packet are input to a pretrained neural network model, and user behavior of interaction for the second sample voice packet is fitted through the neural network model; and network parameters of the neural network model are adjusted and optimized according to the difference between the fitted user behavior of interaction and sample tag data so that the neural network model is retrained.

The associated data of the sample video may be video data of the sample video, such as at least one of video content, description text or other data; and the voice packet associated data may be at least one of search data corresponding to a second sample voice packet, the voice packet identifier of the second sample voice packet, or other data.

It is to be understood that the generalization capability of a trained neural network model is seriously affected by underfitting of the model when the model is trained using a relatively small number of training samples in the case where data amount of a sample video associated with a sample voice packet and sample tag data associated with the sample voice packet is relatively small in the case of cold start. In order that this situation does not occur, in embodiments of the present application, a first video training sample, a user training sample, or the first video training sample and the user training sample that are constructed in a similar scenario (such as a video recommendation scenario or the preceding voice packet search scenario) are migrated to a voice packet recommendation scenario so that a neural network model is pretrained based on a training sample in the similar scenario, thereby avoiding model underfitting.

However, the similar scenario is different from the voice packet recommendation scenario of the present application. As a result, if the neural network model is pretrained based on only a training sample constructed in the similar scenario, the pretrained neural network model cannot be ensured to also have the relatively high generalization capability in the voice packet recommendation scenario. Therefore, the pretrained neural network model needs to be retrained through a tagged sample in the voice packet recommendation scenario so that at least part of network parameters of the pretrained neural network model are adjusted.

It is to be understood that it is usual practice to provide a fully-connected layer in a neural network. The fully-connected layer is used for mapping of a distributed feature representation learned by the model onto a sample tagging space, representing the classification recognition capability of the network to some extent. In an optional implementation of embodiments of the present application, to ensure the model accuracy of a neural network model and shorten the training period of the model, when a pretrained neural network model is retrained, it is feasible to input a video and sample tag data to the pretrained neural network model to adjust network parameters of a fully-connected layer in the neural network model to obtain a final voice packet recommendation model.

In embodiments of the present application, the solution includes constructing a first video training sample according to first user behavior data of a first sample user in a video recommendation scenario and first video data associated with the first user behavior data; constructing a user training sample according to sample search data of the first sample user and historical interaction data about a first sample voice packet; pretraining a neural network model according to the first video training sample and the user training sample; and retraining the pretrained neural network model by using a sample video associated with the second sample voice packet and sample tag data associated with the second sample voice packet to obtain a voice packet recommendation model. In embodiments of the present application, a first video training sample constructed in a video recommendation scenario is migrated to a voice packet recommendation scenario. With this configuration, training samples are enriched during model training in the voice packet recommendation scenario, and thus a voice packet recommendation model can be trained in the case of insufficient training samples, that is, in the case of cold start. In this manner, the obtained voice packet recommendation model can recommend a voice packet automatically in the case of cold start. Moreover, accuracy of the recommendation result provided by the voice packet recommendation model in the case of cold start is guaranteed.

Based on the technical solution of each preceding embodiment, after a voice packet recommendation model is obtained, the obtained voice packet recommendation model may be used to recommend a voice packet to a user automatically. Exemplarily, each candidate display video of a user for recommendation, description text of the each candidate display video, a historical search word of the user, and a historical voice packet used by the user are input to the voice packet recommendation model; and a target display video including download information of a target voice packet is recommended to the user for recommendation according to the model output result of the voice packet recommendation model.

The download information may be displayed through a website or a two-dimensional code carrying website information. Here at least one target display video is available.

When there are at least two target display videos, the target display videos can be played in sequence by being switched in a slidable manner, making it more convenient for a user to operate.

It is to be understood that with a voice packet recommendation model in which cold start is implemented, a voice packet is recommended to a user for recommendation automatically so that a transition is achieved from the case where a user searches for a voice packet to the case where a voice packet searches for a user. Additionally, a voice packet is recommended by using a video associated with the voice packet, so a user does not need to try out voice packets frequently so that a user can acquire a voice packet more conveniently and efficiently. Moreover, video display enables a user to acquire the features of a voice packet more intuitively and comprehensively, strengthens the impression of the user on the voice packet, allows the user to acquire information about the features of the voice packet more easily, and thus improves the browsing experience and the usage experience of the user. Furthermore, a video carries voice packet download information, thereby shortening the step size of downloading.

In one embodiment, to further enhance video interactivity, it is feasible to enable exposure of functions of sharing, upvoting and commenting in a target display video, thereby shortening the step size of video interaction of a user or the step size of user-to-user interaction, improving user engagement, and improving the efficiency of video transmission between users.

It is to be noted that an electronic device for pretraining a neural network model, an electronic device for retraining a neural network model and an electronic device used for a voice packet recommendation model may be the same as or different from each other.

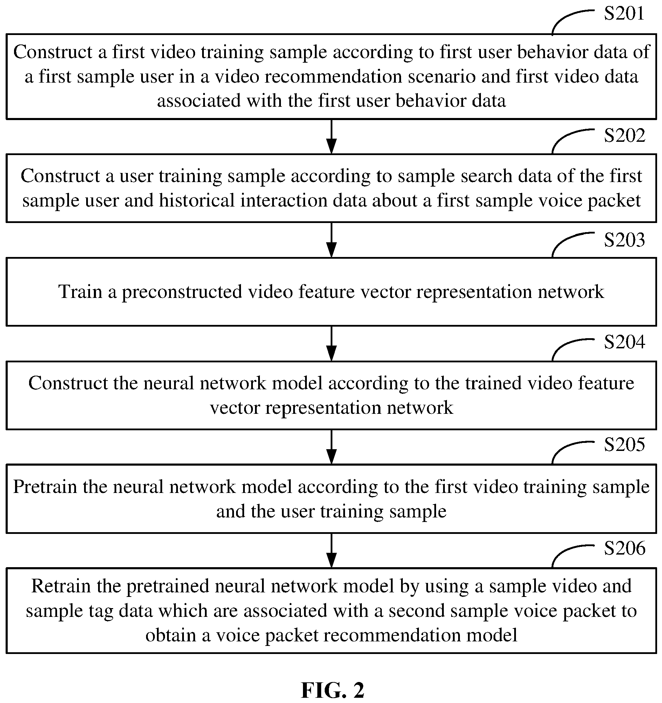

FIG. 2 is a flowchart of another voice packet recommendation method according to embodiments of the present application. The method is an improvement on each preceding solution.

In one embodiment, before the step "the neural network model is pretrained according to the first video training sample and the user training sample" is performed, the step "a preconstructed video feature vector representation network is trained" and the step "the neural network model is constructed according to the trained video feature vector representation network" are added.

A voice packet recommendation method as shown in FIG. 2 includes:
In S201, a first video training sample is constructed according to first user behavior data of a first sample user in a video recommendation scenario and first video data associated with the first user behavior data.
In S202, a user training sample is constructed according to sample search data of the first sample user and historical interaction data about a first sample voice packet.
In S203, a preconstructed video feature vector representation network is trained.

The video feature vector representation network is capable of converting input video data into a feature vector represented in a structured manner.

In an optional implementation of embodiments of the present application, the step "a preconstructed video feature vector representation network is trained" may include that a second video training sample is constructed from second user behavior data of a second sample user in the video recommendation scenario and second video data associated with the second user behavior data; and the preconstructed video feature vector representation network is trained according to the second video training sample.

Here the video recommendation scenario is the same as the preceding video recommendation scenario. The second sample user may be the same as or different from the first sample user.

The second user behavior data may be data about behavior of interaction between the second sample user and a second video. The behavior of interaction may be at least one of browsing, upvoting, adding to favorites, downloading, commenting or sharing. In an optional implementation of embodiments of the present application, in order that the network performance of a trained video feature vector representation network is ensured so that the training efficiency and accuracy of pretraining a neural network model constructed based on the video feature vector representation network are improved, the second user behavior data may include behavior data about user behavior of browsing completed, upvoting and adding to favorites. Exemplarily, it is feasible to determine second video data about the second sample user's behavior of browsing completed, upvoting and adding to favorites to be positive samples, to determine second video data about the second sample user's other browsing behavior to be negative samples, and to construct a second video training sample from each positive sample and each negative sample. To avoid overfitting in a trained video feature vector representation network and ensure the sensitivity and specificity of the trained model, it is usual practice to set a reasonable proportion between positive samples and negative samples. The proportion may be set by a skilled technician according to needs or empirical values or are repeatedly determined by a skilled technician based on a large number of experiments.

The second video data may be data associated with a second video and used for representing at least one of video content, video feature, video attribute or the like. For example, second video data may include at least one of video content, description text or other data of a second video.

For example, second video data associated with second user behavior data in a second video training sample is input to a video feature vector representation network so that a video feature vector is obtained; the video feature vector is processed according to a classifier associated with the video feature vector representation network, and user behavior data corresponding to a second sample user is fitted; and the video feature vector representation network and network parameters in the associated classifier are adjusted and optimized according to the difference between the user behavior data obtained from fitting and the second user behavior data in the second video training sample. In this manner, the video feature vector representation network is trained.

It is to be noted that a video feature vector representation network is trained according to a second video training sample constructed from second user behavior data and second video data associated with the second user behavior data so that a feature vector of a video can be depicted with the aid of the user. In this manner, feature data that can reflect user behavior can be extracted from the trained video feature vector representation network, laying a foundation for the accuracy of the recommendation result of a subsequent voice packet recommendation model.

In S204, the neural network model is constructed according to the trained video feature vector representation network.

It is to be understood that a neural network model is constructed from a trained video feature vector representation model so that there are some non-randomly initialized network parameters in the constructed neural network model, reducing the number of randomly initialized network parameters of the neural network model.

It is to be noted that the sequence in which S203-S204 and S201-S202 are performed is not limited in embodiments of the present application. That is, S203-S204 may be performed before S201-S202, may be performed after S201-S202 or may be performed simultaneously or alternately with S201-S202.

In S205, the neural network model is pretrained according to the first video training sample and the user training sample.

In S206, the pretrained neural network model is retrained by using a sample video and sample tag data which are associated with a second sample voice packet so that a voice packet recommendation model is obtained.

It is to be noted that an electronic device for training a video feature vector representation network, an electronic device for pretraining a neural network model and an electronic device for retraining a neural network model may be the same as or different from each other.

In embodiments of the present application, the step that a preconstructed video feature vector representation network is trained and the step that the neural network model is constructed according to the trained video feature vector representation network are added so that part of the network parameters of the neural network model are initialized in a manner of pretraining. In this manner, it is not needed to randomly initialize all network parameters of the neural network model, and thus it is not needed to invest a high time cost in training of the neural network model. Moreover, overfitting of the trained neural network model is avoided, and thus the model is more robust.

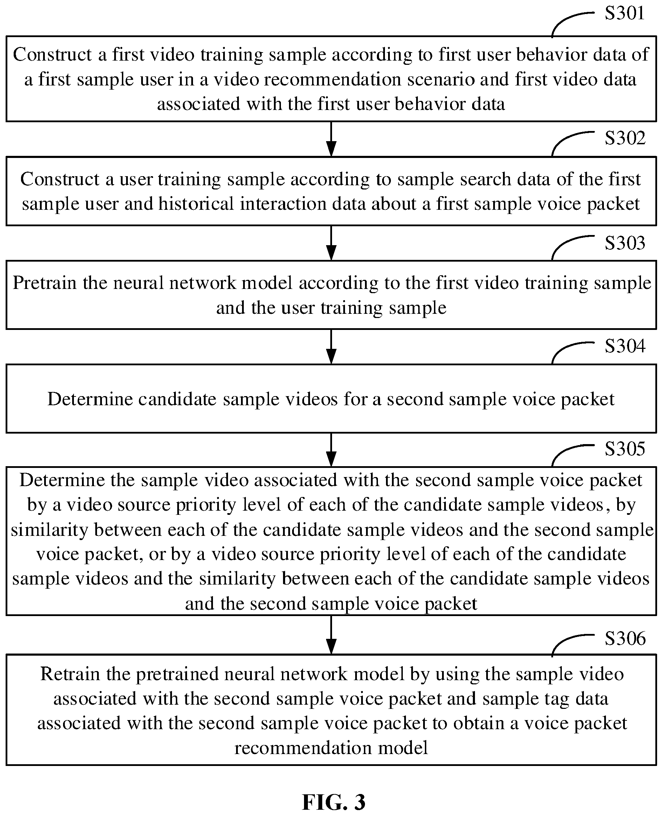

FIG. 3 is a flowchart of another voice packet recommendation method according to embodiments of the present application. The method is an improvement on each preceding solution.

In one embodiment, the step "candidate sample videos are determined for a second sample voice packet" and the step "the sample video associated with the second sample voice packet is determined by a video source priority level of each of the candidate sample videos, by similarity between each of the candidate sample videos and the second sample voice packet, or by a video source priority level of each of the candidate sample videos and similarity between each of the candidate sample videos and the second sample voice packet" are added to the process of performing a voice packet recommendation method so that the construction mechanism of an association between a voice packet and a sample video is optimized.

As shown in FIG. 3, the voice packet recommendation method includes the steps below.

In S301, a first video training sample is constructed according to first user behavior data of a first sample user in a video recommendation scenario and first video data associated with the first user behavior data.

In S302, a user training sample is constructed according to sample search data of the first sample user and historical interaction data about a first sample voice packet.

In S303, the neural network model is pretrained according to the first video training sample and the user training sample.

In S304, candidate sample videos are determined for a second sample voice packet.

In an optional implementation of embodiments of the present application, candidate sample videos of a second sample voice packet may be generated in a manner in which the voice packet provider of the second sample voice packet performs video recording directly. It is to be understood that since a voice packet provider knows more about the style feature of a voice packet of the provider, the provider can record videos more able to highlight the feature of the voice packet and thus can provide candidate sample videos more compatible with a second sample voice packet.

In another optional implementation of embodiments of the present application, to improve the generation efficiency of candidate sample videos and reduce the labor and material costs in generation of candidate sample videos, it is feasible to determine promotion text of a second sample voice packet according to a promotion picture of the voice packet provider of the second sample voice packet; to generate a promotion audio and a promotion caption according to the promotion text based on an acoustic synthesis model of the voice packet provider; and to generate the candidate sample videos according to the promotion picture, the promotion audio and the promotion caption.

Exemplarily, promotion text of the second sample voice packet may be determined by the provider of the voice packet included in a promotion picture. For example, it is feasible to use a profile of the provider of the voice packet as the promotion text; and, based on an acoustic synthesis model of the provider of the voice packet, generate a promotion audio according to the promotion text and generate a promotion caption corresponding to the promotion audio. To make the promotion audio and the promotion caption more powerful in promoting the voice packet, it is feasible to, when the promotion audio and the promotion caption are generated according to the promotion text, generate the promotion caption based on a preconstructed promotion speech template and synthesize the promotion audio corresponding to the promotion caption based on the acoustic synthesis model of the provider of the voice packet so as to simulate the voice of the provider of the voice packet and obtain the promotion caption of the audio playback of the provider of the voice packet.

The promotion speech template may be constructed by a skilled technician according to needs or promotion experience. For example, in a voice packet corresponding to an electronic map, the following promotion speech template may be used: "[profile of a person], welcome to use my voice packet, and [name of the person] accompanies you on the trip safely".

It is to be understood that with the preceding method of generating a video in a template-based manner, video recording is not required so that the video generation efficiency is improved and labor and material costs in video generation are reduced.

In another optional implementation of embodiments of the present application, to improve the generation efficiency of candidate sample videos and reduce the labor and material costs in generation of candidate sample videos, it is feasible to construct video search words according to information about the voice packet provider of the second sample voice packet; and search for videos of the voice packet provider according to the video search words and use the videos of the voice packet provider as the candidate sample videos.

Information about the voice packet provider includes feature description information of the voice packet provider, for example a voice feature like sweet, husky or intimate and a voice broadcasting style like a humorous style or a funny style.

It is to be understood that with the preceding method of searching, by network-wide mining, for a video associated with information about the voice packet provider, video recording is not required so that the video generation efficiency is improved and labor and material costs in video generation are reduced.

In S305, the sample video associated with the second sample voice packet is determined by a video source priority level of each of the candidate sample videos, by similarity between each of the candidate sample videos and the second sample voice packet, or by a video source priority level of each of the candidate sample videos and similarity between each of the candidate sample videos and the second sample voice packet.

In one embodiment, video source priority levels corresponding to different video sources are preset so that a sample video associated with the second sample voice packet can be selected from among candidate sample videos from different sources according to the video source priority level of each of the candidate sample videos. A video source priority level represents the degree of association between a sample voice packet and a sample video. The higher the priority level, the greater the degree of association. It is to be understood that the adoption of a video source priority level ensures the degree of association between a sample voice packet and a sample video, laying a foundation for subsequent retraining of a neural network model by using the sample video associated with the sample voice packet.

Exemplarily, video sources may include at least one of recording by a voice packet provider, templating, or network-wide mining. A video source priority level may be set by a skilled technician according to needs or experience. When there is a change in video sources of candidate sample videos, a skilled technician may perform the following operations according to needs or experience: editing the video sources among video source priority levels and adjusting the priority order of each of the video sources. The change in video sources may include addition or deletion of video sources. Accordingly, editing the video sources may be adding the video sources or deleting the video sources.

For example, when video sources include recording by a voice packet provider, templating, and network-wide mining, the set priority order of the video sources may be the voice packet provider, templating, and network-wide mining from high to low.

In one embodiment, it is feasible to determine the similarity between each of the second sample voice packet and the candidate sample videos from the same or different sources and determine, according to the similarity, the sample video associated with the second sample voice packet. It is to be understood that the method of using similarity to help construct an association between a sample voice packet and a sample video ensures the degree of association between the sample voice packet and the sample video, laying a foundation for subsequent retraining of a neural network model by using the sample video associated with the sample voice packet.

Exemplarily, it is feasible to calculate the cosine similarity between the voice of the second sample voice packet and each candidate sample video by using a neural network, to sort cosine similarities of candidate sample videos, and to determine a candidate sample video reaching a set quantity threshold, satisfying a set number condition, or reaching the set quantity threshold and satisfying the set number condition to be a sample video associated with the second sample voice packet. The set quantity threshold and the set number condition may be set by a skilled technician according to needs or experience.

In the training phase of a neural network, it is feasible to construct a training corpus by manual tagging to obtain a sample voice packet and positive and negative sample videos corresponding to the sample voice packet; accordingly, it is feasible to train the neural network through the training corpus so as to adjust and optimize network parameters in the neural network.

In an optional implementation of embodiments of the present application, the second sample voice packet and a sample video associated with the second sample voice packet may be stored locally in an electronic device or in other storage devices associated with the electronic device. To improve the storage efficiency, it is feasible to store an association between the second sample voice packet and a sample video in a manner of key-value pairs. In one embodiment, the association may be stored using a forward index in which the identifier of a voice packet is a key and video data of a sample video is a value. Alternatively, in one embodiment, the association may be stored using an inverted index in which the video identifier of a sample video is a key and the identifier of a voice packet is a value.

In one embodiment, to further ensure the association between the second target voice packet and a sample video while reducing the amount of data calculation for construction of the association between the second target voice packet and the sample video, it is feasible to preliminarily select candidate sample videos according to video source priority level of each of the candidate sample videos and select the sample video associated with the second target voice packet from among the preliminarily selected candidate sample videos according to the similarity between the second target voice packet and each of the preliminarily selected candidate sample videos.

It is to be noted that the sequence in which S304-S305 and S301-S303 are performed is not limited in embodiments of the present application. That is, S304-S305 may be performed before S301-S303, may be performed after S301-S303 or may be performed simultaneously or alternately with S301-S303.

In S306, the pretrained neural network model is retrained by using the sample video and sample tag data which are associated with the second sample voice packet so that a voice packet recommendation model is obtained.

In embodiments of the present application, the step "candidate sample videos of the second sample voice packet are determined; and the sample video associated with the second sample voice packet is determined by the video source priority level of each of the candidate sample videos, by similarity between each of the candidate sample videos and the second sample voice packet, or by the video source priority level of each of the candidate sample videos and the similarity between each of the candidate sample video and the second sample voice packet" is added to the process of performing a voice packet recommendation method. With the preceding technical solution, the construction mechanism of an association between a second sample voice packet and a sample video is optimized, providing data support for subsequent retraining of a neural network model. Moreover, a sample video associated with a second sample voice packet is selected from among candidate sample videos according to video source priority levels, or the similarity between the sample video and the second sample voice packet, or the video source priority levels and the similarity between the sample video and the second sample voice packet, ensuring the degree of association between the sample video and the second sample voice packet and providing a guarantee for the accuracy of the voice packet recommendation result of a trained voice packet recommendation model.

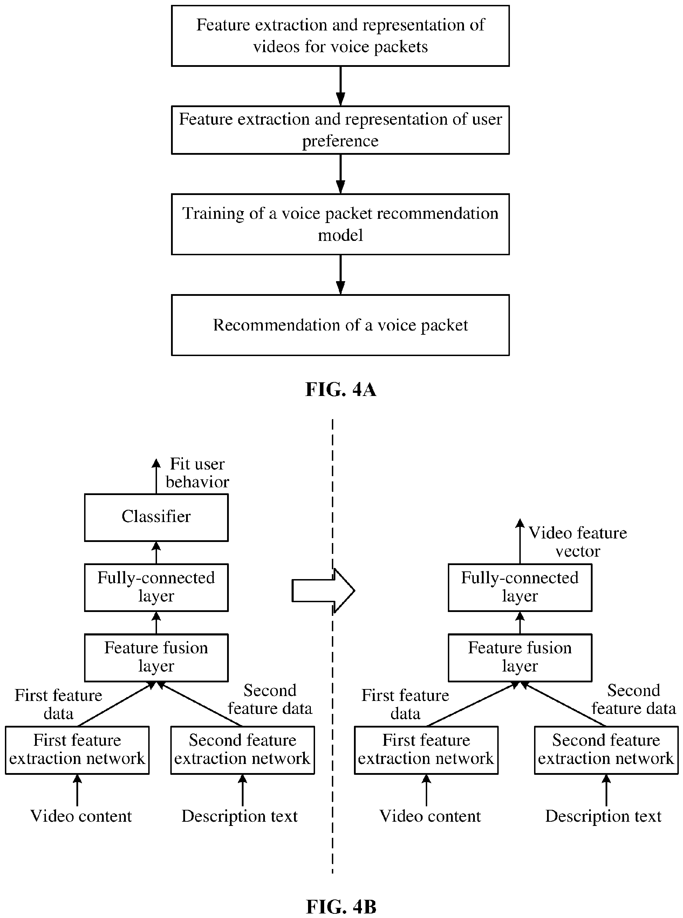

FIG. 4A is a flowchart of another voice packet recommendation method according to embodiments of the present application. The method is a preferred implementation based on each preceding solution.

FIG. 4A shows a voice packet recommendation method. The method includes four phases:
feature extraction and representation of videos for voice packets, feature extraction and representation of user preference, training of a voice packet recommendation model, and recommendation of a voice packet.

### 1. Feature extraction and representation of videos for voice packets

### (1) Generation of videos for voice packets

### a. Generation of candidate sample videos

The sources of videos for voice packets are classified into three types: creation by an expert, network-wide mining, and templating. The details are described below.

Creation by an expert: Candidate sample videos are created from videos recorded by a voice packet provider. The voice packet provider knows more about the features (such as tone and style) of a voice packet of the voice packet provider, so the provider can record videos more able to highlight the features of the voice packet. For example, a video of a voice packet of a person named A is being created, where this video is characterized by a pretty young girl that has a sweet and intimate voice. The features of the video can be presented vividly through sweet dress and intimate words that are added to the video.

Network-wide mining: Videos are mined using constructed keywords. For example, a video of a voice packet of a person named A is being created. Search words such as "intimate videos of A" or "sweet videos of A" are constructed automatically and used in a search for a large number of candidate sample videos in a search engine.

Templating: A video of a voice packet is created in a manner in which related pictures and speech (played by the voice of the voice packet) are merged. For example, a video of a voice packet of a person named A is being created. The profile of A is transformed, based on a promotion speech template, into a promotion caption, for example, "[profile], welcome to use my voice packet, and [name] accompanies you on the trip safely". A promotion audio corresponding to the promotion caption is synthesized according to the acoustic synthesis model of A. A candidate sample video is made according to the promotion caption, the promotion audio and personal photographs of A.

### b. Association between voice packets and videos

In the preceding manner, a large number of candidate sample videos are constructed. It is needed to sort the candidate sample videos according to the degree of relevance between candidate sample videos and a sample voice packet and select at least one candidate sample video as a sample video according to the sorting result. The details are described below.

### (a) Selection of videos from different sources

A priority rule may be predefined to define the priority of videos from different sources. For example, the priority order may be creation by an expert, templating, and network-wide mining from high to low. Then at least one candidate sample video is selected as a sample video according to the priority of the videos.

### (b) Selection of videos from the same source

The cosine similarity between the voice of a voice packet and videos is calculated by using a first neural network. Cosine similarities are sorted. Then at least one candidate sample video is selected as a sample video according to the sorting result.

### (2) Training of a video vector representation network

By migration learning, an output model is trained according to similar scenario data (such as user behavior data in a video recommendation scenario), and then a feature vector representation of each video for a voice packet is encoded through the model. The reason for doing so is that in the case of cold start, a video for a voice packet does not involve a large amount of user behavior data, and thus modeling cannot be performed. On this basis, a video vector representation network is pretrained according to user behavior data of a video recommendation scenario similar to the preceding scenario.

See FIG. 4B. FIG. 4B is a diagram illustrating the structure of a video vector representation network. First, the video vector representation network is pretrained by using user behavior data in a video recommendation scenario so that network parameters are obtained. In the process of training the video vector representation network, assuming that the audience of a certain type of video is relatively fixed, a feature vector of this video is depicted through a user who has browsed this video or has upvoted and commented on this video.

For example, in the process of training a model, video content and description text of a sample video are used as training input of the model, and a user of a video that has been browsed or that has been upvoted and commented is used as an output tag of the model.

The video vector representation network includes a first feature extraction network, a second feature extraction network, a feature fusion layer, a fully-connected layer and a classifier. The first feature extraction network is configured to extract first feature data from video content. The second feature extraction network is configured to extract second feature data from description text. The feature fusion layer is configured to perform fusion processing of the first feature data and the second feature data to obtain fused feature data. The fully-connected layer is configured to map the fused feature data onto a sample tagging space. The classifier is configured to classify samples according to the mapping result of the fused feature data and fit user behavior.

After training of the video vector representation network is completed and the classifier is removed from the video vector representation network, the processed video vector representation network is configured to be able to obtain a video feature vector representation according to video content and description text of a video.

### 2. Feature extraction and representation of user preference

A user preference feature vector representation is encoded based on a search behavior log of a user and historically selected voice packet data of the user. For example, a user who has searched for "sweet voice packet", "pretty little lady" or the like prefers a voice packet of a pretty person having a sweet voice. As another example, a user who has used "voice packet of a person named little A" loves a voice packet of a sweet style like little A.

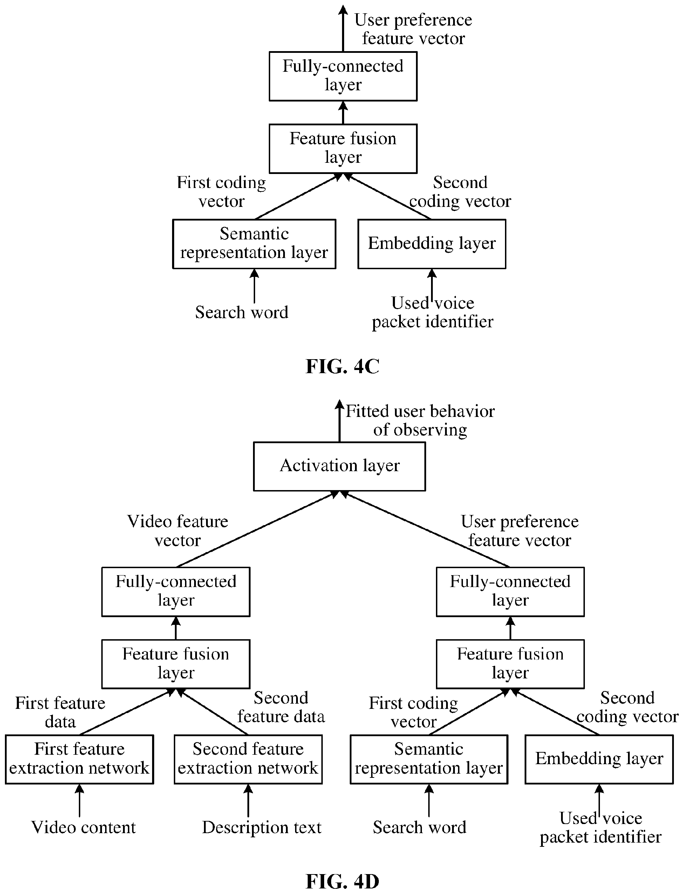

See FIG. 4C. FIG. 4C is a diagram illustrating the structure of a user preference vector representation network. The user preference vector representation network includes a semantic representation layer, an embedding layer, a feature fusion layer and a fully-connected layer. The semantic representation layer is configured to perform coding processing of a search word in a search behavior log to obtain a first coding vector. The embedding layer is configured to perform coding processing of a voice packet identifier, such as a voice packet representation, of a voice packet historically selected by a user to obtain a second coding vector. The feature fusion layer is configured to perform fusion processing of the first coding vector and the second coding vector to obtain a fused coding vector. The fully-connected layer is configured to map the fused coding vector to obtain a user preference feature vector. The semantic representation layer may be implemented using a trained voice representation model.

### 3. Training of a voice packet recommendation model

### (1) Construction of a matching model

Referring to 4D, a diagram illustrating the structure of a matching model, based on the preceding video vector representation network and user preference vector representation network, an activation layer is added so that the matching model is constructed.

The activation layer is configured to perform activation processing of video feature vectors output by a video vector representation network and a user preference feature vector output by a user preference vector representation network and fit user browsing behavior according to the activation processing result. The activation layer may be implemented by dot product calculation.

However, the video vector representation network and the user preference vector representation network are trained and obtained separately, so each of the video feature vectors output by the video vector representation network and the user preference feature vector output by the user preference vector representation network are irrelevant to each other. As a result, the finally constructed matching model is poor in the matching effect. That is, when a voice packet is recommended based on the current matching model, the degree of matching between the recommended voice packet and the user is relatively low. Therefore, the constructed matching network needs to be further trained.

### (2) Pretraining of the matching model

The matching network shown in FIG. 4D is pretrained. Training data is a large number of videos in a video recommendation scenario. Training data that includes video content and description text of each of the videos, historical search words of the user, and a voice packet used by the user is used as a training sample. The training sample is input to the matching network, and user browsing behavior is fitted. Then, matching model parameters are adjusted according to the difference between the fitted behavior and tag values of actual browsing behavior. In this manner, the matching model is pretrained. The user's behavior of browsing completed, upvoting and adding to favorites corresponds to positive-sample tag values. The user's other browsing behavior corresponds to negative-sample tag values.

### (3) Retraining of the matching model

The matching model is pretrained in a manner of migration learning. As a result, the matching model may be unable to adapt to a voice packet recommendation scenario. Therefore, it is also needed to tag a small number of samples in the voice packet recommendation scenario, and retrain the pretrained matching model by using the tagged samples to obtain a voice packet recommendation model having a voice packet recommendation capability.

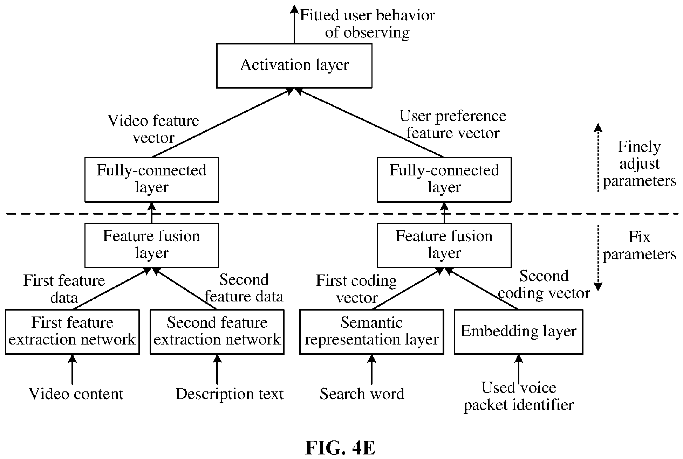

Referring to FIG. 4E, a diagram illustrating the structure of the pretrained matching network, network parameters of the top layer in the matching model, that is, the fully-connected layer, are finely adjusted, and network parameters of the bottom layer are fixed. In this manner, a voice packet recommendation model applicable to a voice packet video personalized recommendation scenario is obtained.

Video content and description text of sample videos associated with the tagged voice packets, search words corresponding to the tagged voice packets, and the voice packet identifiers of the tagged voice packets are used as training samples and input to the pretrained matching model, and user tag data is fitted. Then, network parameters of the fully-connected layer are finely adjusted according to the difference between the user tag data and the tag values. The user tag data may be tag values corresponding to browsing or not browsing.

4. Recommendation of a voice packet

Each candidate display video of a user for recommendation, description text of the each candidate display video, a historical search word of the user, and a historical voice packet used by the user are input to a voice packet recommendation model so that a probability value corresponding to the each candidate display video is obtained. The candidate display videos are sorted according to the probability values. At least one candidate display video provided in a set quantity, satisfying a set probability threshold, or provided in the set quantity and satisfying the set probability threshold is selected as a target display video. The target display video is recommended to the user for recommendation. The target display video is added with download information of a target voice packet corresponding to the target display video.

A target voice packet is recommended to a user through a target display video associated with the target voice packet. In this manner, the user can acquire the feature of the voice packet more intuitively and comprehensively, and the impression of the voice packet on the user is deep, so that the selection efficiency of the user is greatly improved. Moreover, video browsing can improve the user experience of browsing and enables the user to acquire information more easily.

A target voice packet is displayed by video interaction in the following three manners: Functions of sharing, upvoting and commenting are exposed so that the interaction mode is more convenient; a two-dimensional code is dynamically generated for downloading of the voice packet and displayed in the upper right corner of a target video so that the step size of sharing and downloading by a user is shortened and the efficiency of video transmission between users is greatly improved; convenient interactive operations such as switching in a slidable manner are supported.

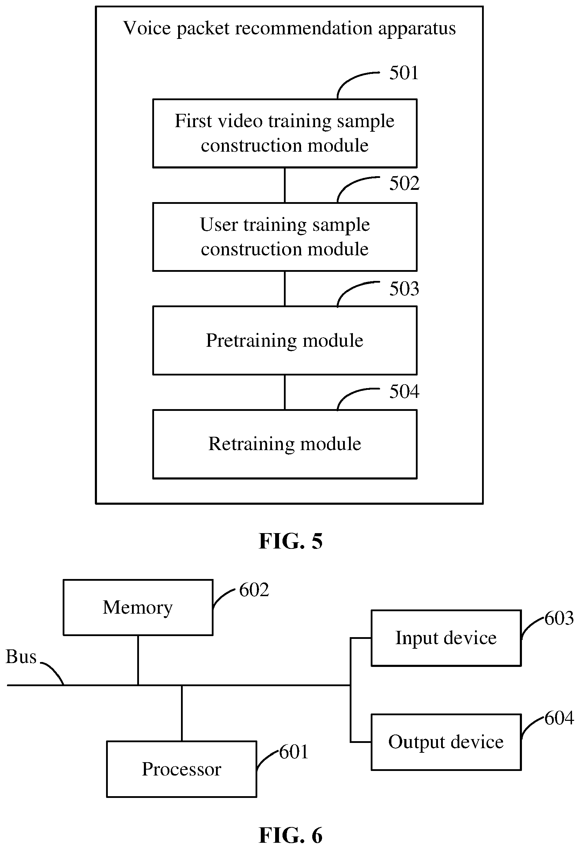

FIG. 5 is a diagram illustrating the structure of a voice packet recommendation apparatus according to embodiments of the present application. The voice packet recommendation apparatus 500 includes a first video training sample construction module 501, a user training sample construction module 502, a pretraining module 503 and a retraining module 504.

The first video training sample construction module 501 is configured to construct a first video training sample according to first user behavior data of a first sample user in a video recommendation scenario and first video data associated with the first user behavior data.

The user training sample construction module 502 is configured to construct a user training sample according to sample search data of the first sample user and historical interaction data about a first sample voice packet.

The pretraining module 503 is configured to pretrain a neural network model according to the first video training sample and the user training sample.

The retraining module 504 is configured to retrain the pretrained neural network model by using a sample video and sample tag data which are associated with a second sample voice packet to obtain a voice packet recommendation model.

In embodiments of the present application, the first video training sample construction module is configured to construct a first video training sample according to first user behavior data of a first sample user in a video recommendation scenario and first video data associated with the first user behavior data; the user training sample construction module is configured to construct a user training sample according to sample search data of the first sample user and historical interaction data about a first sample voice packet; the pretraining module is configured to pretrain a neural network model according to the first video training sample and the user training sample; and the retraining module is configured to retrain the pretrained neural network model by using a sample video and sample tag data which are associated with a second sample voice packet to obtain a voice packet recommendation model. In embodiments of the present application, a first video training sample constructed in a video recommendation scenario is migrated to a voice packet recommendation scenario. With this configuration, training samples are enriched during model training in the voice packet recommendation scenario, and thus a voice packet recommendation model can be trained in the case of insufficient training samples, that is, in the case of cold start. In this manner, the obtained voice packet recommendation model can recommend a voice packet automatically in the case of cold start. Moreover, the accuracy of the recommendation result provided by the voice packet recommendation model in the case of cold start is guaranteed.

In one embodiment, the apparatus further includes a video feature vector representation network training module and a neural network model construction module.

The video feature vector representation network training module is configured to train a preconstructed video feature vector representation network.

The neural network model construction module is configured to construct the neural network model according to the trained video feature vector representation network.

In one embodiment, the video feature vector representation network training module includes a second video training sample construction unit and a video feature vector representation network training unit.

The second video training sample construction unit is configured to construct a second video training sample from second user behavior data of a second sample user in the video recommendation scenario and second video data associated with the second user behavior data.

The video feature vector representation network training unit is configured to train the preconstructed video feature vector representation network according to the second video training sample.

In one embodiment, the retraining module 504 includes a network parameter adjustment unit.

The network parameter adjustment unit is configured to input the sample video and the sample tag data to the pretrained neural network model to adjust network parameters of a fully-connected layer in the neural network model.

In one embodiment, the apparatus further includes a candidate sample video determination module and a sample video determination module.

The candidate sample video determination module is configured to determine candidate sample videos of the second sample voice packet.

The sample video determination module is configured to determine, according to a video source priority level of each of the candidate sample videos, the sample video associated with the second sample voice packet.

In one embodiment, the apparatus further includes a candidate sample video determination module and a sample video determination module.

The candidate sample video determination module is configured to determine candidate sample videos of the second sample voice packet.

The sample video determination module is configured to determine, according to similarity between each of the candidate sample videos and the second sample voice packet, the sample video associated with the second sample voice packet.

In one embodiment, the candidate sample video determination module includes a promotion text determination unit, an audio and caption determination unit and a candidate sample video generation unit.

The promotion text determination unit is configured to determine promotion text of the second sample voice packet according to a promotion picture of the voice packet provider of the second sample voice packet.

The audio and caption determination unit is configured to generate a promotion audio and a promotion caption according to the promotion text based on an acoustic synthesis model of the voice packet provider.

The candidate sample video generation unit is configured to generate the candidate sample videos according to the promotion picture, the promotion audio and the promotion caption.

In one embodiment, the candidate sample video determination module includes a video search word construction unit and a candidate sample video determination unit.

The video search word construction unit is configured to construct video search words according to information about the voice packet provider of the second sample voice packet.

The candidate sample video determination unit is configured to search for videos of the voice packet provider according to the video search words and use the videos of the voice packet provider as the candidate sample videos.

In one embodiment, the apparatus further includes a data input module and a target voice packet recommendation module.

The data input module is configured to input each candidate display video of a user for recommendation, description text of the each candidate display video, historical search words of the user, and a historical voice packet used by the user to the voice packet recommendation model.

The target voice packet recommendation module is configured to recommend a target display video including download information of a target voice packet to the user for recommendation according to the model output result of the voice packet recommendation model.

In one embodiment, the first user behavior data includes behavior data about user behavior of browsing completed, upvoting and adding to favorites; the first video data includes video content and description text of a first video associated with the first user behavior data; and the historical interaction data is voice packet usage data.

The voice packet recommendation apparatus can perform the voice packet recommendation method provided in any one of embodiments of the present application and has function modules and beneficial effects corresponding to the performed method.

According to embodiments of the present application, the present application further provides an electronic device and a readable storage medium.

FIG. 6 is a block diagram of an electronic device for performing a voice packet recommendation method according to embodiments of the present application. The electronic device is intended to represent a form of digital computer, for example, a laptop computer, a desktop computer, a worktable, a personal digital assistant, a server, a blade server, a mainframe computer or another applicable computer. The electronic device may also represent a form of mobile device, for example, a personal digital assistant, a cellphone, a smartphone, a wearable device or another similar computing device. Herein the shown components, the connections and relationships between these components, and the functions of these components are illustrative only and are not intended to limit the implementation of the present application as described or claimed herein.

As shown in FIG. 6, the electronic device includes one or more processors 601, a memory 602, and interfaces for connecting components, including a high-speed interface and a low-speed interface. The components are interconnected to each other by different buses and may be mounted on a common mainboard or in other manners as desired. The processor may process instructions executed in the electronic device, including instructions stored in or on the memory to make graphic information of a GUI displayed on an external input/output device (for example, a display device coupled to an interface). In other embodiments, if required, multiple processors, multiple buses or a combination thereof may be used with multiple memories. Similarly, multiple electronic devices may be connected, each providing some necessary operations (for example, a server array, a set of blade servers or a multi-processor system). FIG. 6 shows one processor 601 by way of example.

The memory 602 is the non-transitory computer-readable storage medium provided in the present application. The memory stores instructions executable by at least one processor to cause the at least one processor to perform the voice packet recommendation method provided in the present application. The non-transitory computer-readable storage medium of the present application stores computer instructions for causing a computer to perform the voice packet recommendation method provided in the present application.

The memory 602 as a non-transitory computer-readable storage medium is configured to store non-transitory software programs and non-transitory computer-executable programs and modules, for example, program instructions/modules corresponding to the voice packet recommendation method provided in embodiments of the present application (for example, the first video training sample construction module 501, the user training sample construction module 502, the pretraining module 503 and the retraining module 504 shown in FIG. 5). The processor 601 is configured to execute non-transitory software programs, instructions and modules stored in the memory 602 to execute the function applications and data processing of a server, that is, perform the voice packet recommendation method provided in the preceding method embodiments.

The memory 602 may include a program storage region and a data storage region. The program storage region may store an operating system and an application program required by at least one function. The data storage region may store data created based on the use of the electronic device for performing the voice packet recommendation method. Additionally, the memory 602 may include a high-speed random-access memory and a non-transient memory, for example, at least one disk memory, a flash memory or another non-transient solid-state memory. In some embodiments, the memory 602 optionally includes memories disposed remote from the processor 601, and these remote memories may be connected, through a network, to the electronic device for performing the voice packet recommendation method. Examples of the preceding network include, but are not limited to, the Internet, an intranet, a local area network, a mobile communication network and a combination thereof.

The electronic device for performing the voice packet recommendation method may further include an input device 603 and an output device 604. The processor 601, the memory 602, the input device 603 and the output device 604 may be connected by a bus or in other manners. FIG. 6 uses connection by a bus as an example.

The input device 603 can receive input number or character information and generate key signal input related to user settings and function control of the electronic device for performing the voice packet recommendation method. The input device 403 may be, for example, a touchscreen, a keypad, a mouse, a trackpad, a touchpad, a pointing stick, one or more mouse buttons, a trackball or a joystick. The output device 604 may be, for example, a display device, an auxiliary lighting device (for example, an LED) or a haptic feedback device (for example, a vibration motor). The display device may include, but is not limited to, a liquid-crystal display (LCD), a light-emitting diode (LED) display or a plasma display. In some embodiments, the display device may be a touchscreen.

The embodiments of the systems and techniques described herein may be implemented in digital electronic circuitry, integrated circuitry, an application-specific integrated circuit (ASIC), computer hardware, firmware, software or a combination thereof. The embodiments may include implementations in one or more computer programs. The one or more computer programs are executable, interpretable, or executable and interpretable on a programmable system including at least one programmable processor. The programmable processor may be a dedicated or general-purpose programmable processor for receiving data and instructions from a memory system, at least one input device and at least one output device and transmitting the data and instructions to the memory system, the at least one input device and the at least one output device.

These computing programs (also referred to as programs, software, software applications or codes) include machine instructions of a programmable processor. These computing programs may be implemented in a high-level procedural or object-oriented programming language or in an assembly/machine language. As used herein, the term "machine-readable medium" or "computer-readable medium" refers to any computer program product, device or apparatus (for example, a magnetic disk, an optical disk, a memory or a programmable logic device (PLD)) for providing machine instructions or data for a programmable processor, including a machine-readable medium for receiving machine instructions as machine-readable signals. The term "machine-readable signal" refers to any signal used in providing machine instructions or data for a programmable processor.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback).

Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN) and the Internet.

The computing system may include clients and servers. A client and a server are generally remote from each other and typically interact through a communication network. The relationship between the client and the server arises by virtue of computer programs running on the respective computers and having a client-server relationship to each other.

In embodiments of the present application, the solution includes constructing a first video training sample according to first user behavior data of a first sample user in a video recommendation scenario and first video data associated with the first user behavior data; constructing a user training sample according to sample search data of the first sample user and historical interaction data about a first sample voice packet; pretraining a neural network model according to the first video training sample and the user training sample; and retraining the pretrained neural network model by using a sample video and sample tag data which are associated with a second sample voice packet to obtain a voice packet recommendation model. In embodiments of the present application, a first video training sample constructed in a video recommendation scenario is migrated to a voice packet recommendation scenario. With this configuration, training samples are enriched during model training in the voice packet recommendation scenario, and thus a voice packet recommendation model can be trained in the case of insufficient training samples, that is, in the case of cold start. In this manner, the obtained voice packet recommendation model can recommend a voice packet automatically in the case of cold start. Moreover, the accuracy of the recommendation result provided by the voice packet recommendation model in the case of cold start is guaranteed.

It is to be understood that various forms of the preceding flows may be used, with steps reordered, added or removed. For example, the steps described in the present application may be executed in parallel, in sequence or in a different order as long as the desired result of the technical solution disclosed in the present application is achieved. The execution sequence of these steps is not limited herein.

The scope of the present application is not limited to the preceding embodiments. It is to be understood by those skilled in the art that modifications, combinations, subcombinations and substitutions may be made depending on design requirements and other factors. Any modifications, equivalent substitutions, improvements and the like made within the spirit and principle of the present application are within the scope of the present application.

## Claims

1. A voice packet recommendation method, comprising:
constructing a first video training sample according to first user behavior data of a first sample user in a video recommendation scenario and first video data associated with the first user behavior data;
constructing a user training sample according to sample search data of the first sample user and historical interaction data about a first sample voice packet;
pretraining a neural network model according to the first video training sample and the user training sample; and
retraining the pretrained neural network model by using a sample video and sample tag data which are associated with a second sample voice packet to obtain a voice packet recommendation model.

2. The method of claim 1, further comprising:
training a preconstructed video feature vector representation network; and
constructing the neural network model according to the trained video feature vector representation network.

3. The method of claim 2, wherein the "training a preconstructed video feature vector representation network" comprises:
constructing a second video training sample from second user behavior data of a second sample user in the video recommendation scenario and second video data associated with the second user behavior data; and
training the preconstructed video feature vector representation network according to the second video training sample.

4. The method of claim 1, wherein the "retraining the pretrained neural network model by using a sample video and sample tag data which are associated with a second sample voice packet" comprises:
inputting the sample video and the sample tag data to the pretrained neural network model to adjust network parameters of a fully-connected layer in the pretrained neural network model.

5. The method of claim 1, further comprising:
determining candidate sample videos of the second sample voice packet; and
determining, according to a video source priority level of each of the candidate sample videos, the sample video associated with the second sample voice packet.

6. The method of claim 1, further comprising:
determining candidate sample videos of the second sample voice packet; and
determining, according to similarity between each of the candidate sample videos and the second sample voice packet, the sample video associated with the second sample voice packet.

7. The method of claim 5 or 6, wherein the "determining candidate sample videos of the second sample voice packet" comprises:
determining promotion text of the second sample voice packet according to a promotion picture of a voice packet provider of the second sample voice packet;
generating a promotion audio and a promotion caption according to the promotion text based on an acoustic synthesis model of the voice packet provider; and
generating the candidate sample videos according to the promotion picture, the promotion audio and the promotion caption.

8. The method of claim 5 or 6, wherein the "determining candidate sample videos of the second sample voice packet" comprises:
constructing a video search word according to information about a voice packet provider of the second sample voice packet; and
searching for videos of the voice packet provider according to the video search word and using the videos of the voice packet provider as the candidate sample videos.

9. The method of any one of claims 1 to 6, further comprising:
inputting each candidate display video of a user for recommendation, description text of the each candidate display video, a historical search word of the user, and a historical voice packet used by the user to the voice packet recommendation model; and
recommending a target display video comprising download information of a target voice packet to the user for recommendation according to a model output result of the voice packet recommendation model.

10. The method of any one of claims 1 to 6, wherein the first user behavior data comprises behavior data about user behavior of browsing completed, upvoting and adding to favorites; the first video data comprises video content and description text of a first video associated with the first user behavior data; and the historical interaction data is voice packet usage data.

11. A voice packet recommendation apparatus, comprising:
a first video training sample construction module configured to construct a first video training sample according to first user behavior data of a first sample user in a video recommendation scenario and first video data associated with the first user behavior data;
a user training sample construction module configured to construct a user training sample according to sample search data of the first sample user and historical interaction data about a first sample voice packet;
a pretraining module configured to pretrain a neural network model according to the first video training sample and the user training sample; and
a retraining module configured to retrain the pretrained neural network model by using a sample video and sample tag data which are associated with a second sample voice packet to obtain a voice packet recommendation model.

12. The apparatus of claim 11, further comprising:
a video feature vector representation network training module configured to train a preconstructed video feature vector representation network; and
a neural network model construction module configured to construct the neural network model according to the trained video feature vector representation network.

13. The apparatus of claim 12, wherein the video feature vector representation network training module comprises:
a second video training sample construction unit configured to construct a second video training sample from second user behavior data of a second sample user in the video recommendation scenario and second video data associated with the second user behavior data; and
a video feature vector representation network training unit configured to train the preconstructed video feature vector representation network according to the second video training sample.

14. The apparatus of claim 11, wherein the retraining module comprises:
a network parameter adjustment unit configured to input the sample video and the sample tag data to the pretrained neural network model to adjust network parameters of a fully-connected layer in the neural network model.

15. The apparatus of claim 11, further comprising:
a candidate sample video determination module configured to determine candidate sample videos of the second sample voice packet; and
a sample video determination module configured to determine, according to a video source priority level of each of the candidate sample videos, the sample video associated with the second sample voice packet.

16. The apparatus of claim 11, further comprising:
a candidate sample video determination module configured to determine candidate sample videos of the second sample voice packet; and
a sample video determination module configured to determine, according to similarity between each of the candidate sample videos and the second sample voice packet, the sample video associated with the second sample voice packet.

17. The apparatus of claim 15 or 16, wherein the candidate sample video determination module comprises:
a promotion text determination unit configured to determine promotion text of the second sample voice packet according to a promotion picture of a voice packet provider of the second sample voice packet;
an audio and caption determination unit configured to generate a promotion audio and a promotion caption according to the promotion text based on an acoustic synthesis model of the voice packet provider; and
a candidate sample video generation unit configured to generate the candidate sample videos according to the promotion picture, the promotion audio and the promotion caption.

18. The apparatus of claim 15 or 16, wherein the candidate sample video determination module comprises:
a video search word construction unit configured to construct a video search word according to information about a voice packet provider of the second sample voice packet; and
a candidate sample video determination unit configured to search for videos of the voice packet provider according to the video search word and use the videos of the voice packet provider as the candidate sample videos.

19. The apparatus of any one of claims 11 to 16, further comprising:
a data input module configured to input each candidate display video of a user for recommendation, description text of the each candidate display video, a historical search word of the user, and a historical voice packet used by the user to the voice packet recommendation model; and
a target voice packet recommendation module configured to recommend a target display video comprising download information of a target voice packet to the user for recommendation according to a model output result of the voice packet recommendation model.

20. The apparatus of any one of claims 11 to 16, wherein the first user behavior data comprises behavior data about user behavior of browsing completed, upvoting and adding to favorites; the first video data comprises video content and description text of a first video associated with the first user behavior data; and the historical interaction data is voice packet usage data.

21. An electronic device, comprising:
at least one processor; and
a memory which is in communication connection to the at least one processor, wherein
the memory stores instructions executable by the at least one processor, wherein the instructions are configured to, when executed by at least one processor, cause the at least one processor to perform the voice packet recommendation method of any one of claims 1 to 10.

22. A non-transitory computer-readable storage medium, storing computer instructions, wherein the computer instructions are configured to cause a computer to perform the voice packet recommendation method of any one of claims 1 to 10.
